# EUROPÄISCHE PATENTSCHRIFT

(11) **EP 3 452 847 B1**
(45) Veröffentlichungstag und Bekanntmachung des Hinweises auf die Patenterteilung: **25.03.2020**
(21) Anmeldenummer: 17720821.2
(22) Anmeldetag: 03.05.2017
(51) Int. Cl.: G01S 13/93, G01S 13/87, G01S 13/42

(54) **KRAFTFAHRZEUG MIT WENIGSTENS ZWEI RADARSENSOREN**
MOTOR VEHICLE HAVING AT LEAST TWO RADAR SENSORS
VÉHICULE AUTOMOBILE COMPRENANT AU MOINS DEUX CAPTEURS RADARS

(30) Priorität: 06.05.2016 DE 102016005620
(43) Veröffentlichungstag der Anmeldung: 13.03.2019
(73) Patentinhaber: Audi AG, 85045 Ingolstadt (DE)
(72) Erfinder: KHLIFI, Rachid, 85748 Garching (DE)
(86) Internationale Anmeldenummer: PCT/EP2017/060559
(87) Internationale Veröffentlichungsnummer: WO 2017/191201

(56) Entgegenhaltungen:
- EP-A1- 2 555 014
- EP-A2- 1 278 076
- EP-A2- 2 058 675
- WO-A1-2005/109036
- WO-A1-2012/140769
- WO-A2-03/019229
- DE-A1- 10 261 027
- DE-A1-102013 200 793
- DE-A1-102014 116 014
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 1. Dezember 2010 (2010-12-01), Seiten 2746-2756, XP055088008, ISSN: 0018-9200, DOI: 10.1109/JSSC.2010.2075250 in der Anmeldung erwähnt

## Beschreibung

Die Erfindung betrifft ein Kraftfahrzeug, aufweisend wenigstens zwei Radarsensoren, die jeweils eine eine Winkelmessung in Elevation und Azimut erlaubende Antennenanordnung aufweisen, wobei die Erfassungsbereiche von wenigstens zwei der wenigstens zwei Radarsensoren in einem Überlappungsbereich überlappen.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Heutige Fahrerassistenzsysteme setzen meist nur wenige Radarsensoren im Kraftfahrzeug ein. So kann beispielsweise vorgesehen sein, dass bei einem Spurwechselassistenzsystem zwei Radarsensoren im hinteren Stoßfänger des Kraftfahrzeugs verbaut sind. Dabei wird meist eine symmetrische Bauweise bevorzugt, damit die linke und rechte Seite des Kraftfahrzeugs symmetrisch abgedeckt sind. Im vorderen Bereich des Kraftfahrzeugs kann beispielsweise vorgesehen sein, zwei Radarsensoren für eine Längsführungsanwendung, beispielsweise ein ACC-System, einzusetzen, die auch symmetrisch im Stoßfänger verbaut werden können. Dabei werden Radarsensoren hauptsächlich für die horizontale Winkelvermessung (Azimut) von bewegten Objekten im Umfeld des Kraftfahrzeugs eingesetzt. Beispielsweise werden beim Spurwechselassistenzsystem die überholenden Kraftfahrzeuge detektiert und der Fahrer wird beim kritischen Spurwechsel gewarnt. Auch bei ACC-Systemen wird der Abstand zum vorderen bewegten Objekt sensiert und es kann eine Warnung des Fahrers in kritischen Situationen vorgesehen sein.

Moderne, neu vorgeschlagene Fahrerassistenzsysteme und sonstige Fahrzeugsysteme, die die eingangs erläuterten verbesserten Detektionseigenschaften moderner Radarsensoren weitergehend nutzen wollen, setzen meist eine größere Anzahl von Radarsensoren ein, die beispielsweise das gesamte Umfeld des Kraftfahrzeugs in einem 360°-Radius abdecken können. Es wurde vorgeschlagen, derartige Radarsensoren auch mit einer Elevationsmessfähigkeit zu versehen. Dabei existiert jedoch das Problem, dass bei vielen modernen Radarsensoren der Vertikalbereich, in dem verlässliche und genaue Werte für die Elevation bestimmt werden können, eher gering ist.

In WO 2005/109036 A1 wird ein Objekterkennungssystem für ein Kraftfahrzeug beschrieben. Das Kraftfahrzeug kann dabei zwei Radarsensoren umfassen, welche unterschiedliche vertikale Erfassungswinkel aufweisen. Ein erster Sensor kann dabei die Fahrbahnoberfläche miterfassen, wobei ein zweiter Sensor die Fahrbahnoberfläche nicht miterfasst. Eine Auswerteeinheit kann auf die Anwesenheit eines Objektes im Erfassungsbereich insbesondere nur dann schließen, wenn beide Sensoren das Objekt erkannt haben. Auf diese Weise wird eine Erfassung von sehr flachen, nur eine geringe Höhe aus der Fahrbahnoberfläche hinausragenden Objekten, welche nicht in den Erfassungsbereich des zweiten Sensors hineinragen, unterbunden. Ein Objekt, welches in die Erfassungsbereiche beider Sensoren hineinragt, kann als störend für den Fahrbetrieb des Kraftfahrzeugs bewertet werden.

WO 201/140769 A1 offenbart eine Objekterkennungseinrichtung und ein Verfahren zur Objekterkennung für ein Fahrzeug. Dabei können zwei Ultraschallsensoren vertikal versetzt angeordnet werden. Durch diesen vertikalen Versatz kann eine Höheninformation eines erfassten Objektes erhalten werden, da unterschieden werden kann, ob das erfasste Objekt von der Sensorposition nach oben oder nach unten hin beabstandet ist.

EP 2 555 014 A1 beschreibt ein Verfahren zur Erfassung und Bewertung einer Ebene, bei dem ein erster Sensor schräg von oben auf eine Fahrbahn oder eine Fahrbahnebene gerichtet ist und ein zweiter Sensor von einer tieferen Position aus das Vorfeld parallel zur Fahrbahnoberfläche erfasst. Der parallel zur Fahrbahnoberfläche messende, als Laserscanner ausgeführte zweite Sensor kann dabei ein dunkles bzw. schwarzes Objekt nicht erkennen, da an diesem keine Reflexion des vom Sensor abgestrahlten Laserlichts erfolgt. Ein derartiges Objekt wird stattdessen von dem auf dem Fahrzeug angeordneten ersten Sensor erkannt, welcher schräg von oben auf die Fahrbahnoberfläche blickt.

In EP 2 058 675 A2 wird vorgeschlagen, zum Erhalt einer vertikalen Winkelinformation an den Ecken eines Kraftfahrzeugs vertikal versetzte Abstandssensoren vorzusehen, welche es ermöglichen, einen der vertikal versetzten Sensoren als Sender zu betreiben und den anderen als Empfänger. Auf diese Weise soll vermieden werden, dass aufgrund einer vertikalen Beabstandung eines Objektes zu den Sensoren eine zu große horizontale Entfernung angenommen wird.

DE 10 2013 200 793 A1 beschreibt ein Fahrerassistenzsystem, welches mehrere Sensoren umfasst, die an einem Kraftfahrzeug sowohl mit horizontalem als auch mit vertikalem Versatz angeordnet sind. Die Sensoren weisen dabei unterschiedliche Erfassungsbereiche auf, welche entweder zur Erfassung eines Nahbereichs oder zur Erfassung eines Fernbereichs geeignet sind. Aus der Differenz der Schalllaufwege und der Differenz der Einbauhöhen kann über trigonometrische Funktionen auf die Höhe eines Reflexpunktes an einem erfassten Objekt geschlossen werden.

DE 10 2014 116 014 A1 offenbart ein Fahrerassistenzsystem eines Kraftfahrzeugs, welches mehrere vertikal und horizontal versetzte Abstandssensoren entlang der Seitenfläche eines Kraftfahrzeuges aufweist. Die Bestimmung der Höhe eines Objektes erfolgt bei einem Vorbeibewegen des Kraftfahrzeuges an dem Objekt aus den zu verschiedenen Zeitpunkten durchgeführten Messungen der Abstandssensoren.

Aus EP 1 278 076 A2 ist ein Abstandsmesssystem bekannt, welches wenigstens zwei Ultraschallsensoren umfasst, wobei einer der Ultraschallsensoren ober- oder unterhalb wenigstens eines anderen Ultraschallsensors angeordnet ist. Aufgrund der unterschiedlichen Laufzeiten der Signale lässt sich die absolute oder relative Höhe eines Gegenstands in dem Erfassungsbereich des Abstandsmesssystems bestimmen.

DE 102 61 027 A1 beschreibt ein winkelauflösendes Antennensystem umfassend zwei Radarsensoren mit getrennten Sende- und Empfangsantennen. Die Empfangsantennen der beiden Radarsensoren sind sowohl hinsichtlich ihrer Hauptabstrahlrichtung als auch ihrer Strahlöffnungsbreite umschaltbar, wobei eine Winkelinformation aus den Empfangssignalen bei unterschiedlichen Schaltzuständen gewonnen wird.

In WO 03/019229 A2 werden ein Verfahren zum Bestimmen der Position eines Zielobjektes und ein nach diesem Verfahren betriebenes Radarsystem offenbart. Das Verfahren ist dabei ein Amplituden-Monopulsverfahren, bei dem die Signale von wenigstens zwei räumlich getrennten Sende- und Empfangseinheiten ausgewertet werden. Eine Position eines Zielobjektes wird aus dem radialen Abstand der Sende- und Empfangseinheiten von dem Zielobjekt sowie aus dem Verhältnis der Amplituden der beiden Signale bestimmt.

Der Erfindung liegt daher die Aufgabe zugrunde, eine Möglichkeit zur verbesserten Ermittlung von Elevationsinformatonen von Objekten im Umfeld des Kraftfahrzeugs mittels Radarsensoren anzugeben.

Diese Aufgabe wird durch ein Kraftfahrzeug nach Anspruch 1 gelöst.

Es wird mithin vorgeschlagen, die insbesondere zur Umfeldüberwachung des Kraftfahrzeugs eingesetzten Radarsensoren zum einen mit überlappenden Erfassungsbereichen zu versehen, zum anderen aber Radarsensoren, die einen Überlappungsbereich aufweisen, aber horizontal versetzt sind, auch vertikal zu versetzen, mithin in unterschiedlicher Einbauhöhe in dem Kraftfahrzeug zu verbauen. Auf diese Weise kann ein Mehrwert bei der Elevationsmessfähigkeit erzielt werden, denn durch die unterschiedliche Einbauhöhe der Radarsensoren können im Überlappungsbereich die Objekte, beispielsweise Hindernisse, unter unterschiedlichen vertikalen Abstrahlwinkeln vermessen werden, was eine verbesserte Performance in der Höhenvermessung von Objekten mit sich bringt, da insbesondere die erhaltenen Informationen kombiniert werden können. Zudem wird durch die unterschiedlichen Einbauhöhen der Sensoren der vertikale Verlässlichkeitsbereich der Elevationsmessung erhöht. Denn betrachtet man die Elevations-Winkelmessfähigkeit in der Vertikalen, stellt man fest, dass nicht über den gesamten Erfassungsbereich eine hinreichend hohe, beispielsweise einen Schwellwert überschreitende Genauigkeit der Elevations-Winkelmessung gegeben ist, sondern der Bereich guter Elevations-Winkelmessfähigkeit meist auf das Zentrum des Erfassungsbereichs beschränkt ist, nachdem im äußeren Bereich der Radarkeule die Elevationsmessfähigkeit stark fehlerbehaftet ist. Im Überlappungsbereich liegen die Bereiche guter Elevations-Winkelmessfähigkeit der Radarsensoren, deren Erfassungsbereiche in dem Überlappungsbereich überlappen, auf unterschiedlichen Höhen, so dass sich die Bereiche guter Elevations-Winkelmessfähigkeit zu einem größeren Bereich guter Elevations-Winkelmessfähigkeit ergänzen. Mit anderen Worten weisen die Radarsensoren des Kraftfahrzeugs in der Hauptabstrahlrichtung die beste Winkelmessgüte auf, das bedeutet, im mittleren Bereich der Haupt-Radarkeule ist der Winkelfehler am geringsten, im äußeren Bereich der Haupt-Radarkeule ist der Winkelfehler am größten. Dieses Verhalten wird durch eine unterschiedliche Einbauhöhe der Sensoren genutzt, um den Bereich guter Elevationsmessfähigkeit zu vergrößern.

Dabei sei an dieser Stelle noch darauf hingewiesen, dass Möglichkeiten zur Ausgestaltung von Antennenanordnungen derart, dass auch ein Elevationswinkel gemessen werden kann, im Stand der Technik bereits grundsätzlich bekannt sind. Beispielsweise kann vorgesehen sein, dass die Antennenanordnung wenigstens zwei in einer horizontalen Richtung und wenigstens zwei in einer vertikalen Richtung aufeinanderfolgende Antennenelemente aufweist, die insbesondere matrixartig angeordnet sind. Beispielsweise können in einer Richtung vier Antennenelemente einander horizontal benachbart vorhanden sein, während ein weiteres Antennenelement an eines der horizontal benachbarten Antennenelemente in vertikaler Richtung anschließt.

Erfindungsgemäß weist das Kraftfahrzeug eine Steuereinrichtung zur Auswertung der Radardaten der Radarsensoren auf, die wenigstens bei der Ermittlung einer Elevationsinformation für ein im Überlappungsbereich gelegenes, vermessenes Merkmal zur gemeinsamen Auswertung aller Radardaten der im Überlappungsbereich messenden Radarsensoren ausgebildet ist. Dabei kann insbesondere vorgesehen sein, dass im Rahmen der gemeinsamen Auswertung eine statistische Zusammenführung und/oder eine gegenseitige Plausibilisierung der Radardaten stattfindet. Wird beispielsweise ein Merkmal, insbesondere ein Objekt, im Überlappungsbereich von wenigstens zwei benachbarten Radarsensoren vermessen, so resultieren in den Radardaten Elevationswinkel oder allgemein Elevationsinformationen, beispielsweise Höhenwerte, der wenigstens zwei Radarsensoren mit unterschiedlichen Einbauhöhen. Hierdurch entsteht eine redundante Messung der Höhe des Merkmals unter unterschiedlichen Elevationssichtwinkeln. Sind die gemessenen Elevationsinformationen unterschiedlich, beispielsweise also unterschiedliche Höhenwerte gegeben, so kann eine Auswertung mit den wenigstens zwei Elevationsinformationen durchgeführt werden, insbesondere eine statistische Kombination, um einen besseren Wert zu generieren. Hierbei kann ein Mittelwert, ein Median oder dergleichen bestimmt werden. So wird insgesamt die Höhenvermessung von Objekten verbessert, indem nicht nur die interne Antennenanordnung innerhalb eines einzelnen Radarsensors relevant ist, sondern Radardaten mehrerer Radarsensoren unterschiedlicher Einbauhöhe berücksichtigt werden.

Erfindungsgemäß ist vorgesehen, dass die Steuereinrichtung bei der Ermittlung der Elevationsinformation zur gewichteten Berücksichtigung der Radardaten einzelner im Überlappungsbereich messender Radarsensoren anhand einer von ihrer Einbauhöhe abhängigen Verlässlichkeitsinformation ausgebildet ist. Wie bereits dargestellt wurde, liegen im vertikalen Verlauf des Erfassungsbereichs unterschiedliche Winkelfehler der Elevations-Winkelmessung vor, was selbstverständlich auch im Rahmen der Auswertung und insbesondere statistischen Zusammenführung von Radardaten berücksichtigt werden kann. Liegt ein Objekt beispielsweise bezüglich der Höhe zentral im Erfassungsbereich eines Radarsensors, ist von einem sehr geringen Winkelfehler und mithin von einer hohen Verlässlichkeit auszugehen. Das bedeutet, dass davon ausgegangen werden kann, dass diese Radardaten die Höhe des Objekts besser beschreiben als die eines anderen Radarsensors, bei dem aufgrund dessen Einbauhöhe das Objekt eher im äußeren Rand der Radarkeule liegt. Verlässlichere Radardaten werden dabei priorisiert, insbesondere also höher gewichtet.

Die Antennenanordnungen aller Radarsensoren können gleich ausgebildet und/oder orientiert sein, wobei insbesondere sogar vorgesehen sein kann, dass alle Radarsensoren baugleich sind und/oder in gleicher Orientierung eingebaut werden. Trotzdem mithin die Radarsensoren sich zumindest bezüglich ihrer Antennenanordnung nicht unterscheiden, ist eine verbesserte Elevationsmessfähigkeit gegeben, wobei insbesondere dieselben Radarsensoren an allen Einbaupositionen im Kraftfahrzeug eingesetzt werden können.

Eine vorteilhafte Weiterbildung der Erfindung sieht vor, dass eine gerade Anzahl von Radarsensoren vorhanden ist, wobei in Umlaufrichtung um das Kraftfahrzeug immer abwechselnd ein Radarsensor höher und ein Radarsensor tiefer verbaut ist, und/oder dass die Radarsensoren das Umfeld des Kraftfahrzeugs in einem 360°-Winkelbereich horizontal abdecken. Besonders vorteilhaft ist in diesem Kontext, wenn die Radarsensoren, auch bezüglich ihrer Einbauhöhen, bezüglich einer mittleren Längsachse des Kraftfahrzeugs symmetrisch angeordnet sind. Auf diese Weise wird die Abdeckungssymmetrie bezüglich der linken und der rechten Seite vorteilhafterweise beibehalten, das bedeutet, sowohl auf der linken als auch auf der rechten Seite des Kraftfahrzeugs werden Radardaten und Informationen gleicher Qualität erhalten. Mithin ist auch im Rahmen der Auswertung der Radardaten oder der daraus abgeleiteten Informationen keine Unterscheidung nach der Seite des Kraftfahrzeugs notwendig, so dass entsprechende Algorithmen, die von dieser Achssymmetrie ausgehen, beibehalten werden können.

In einer konkreten, besonders bevorzugten Ausgestaltung der vorliegenden Erfindung sind acht Radarsensoren vorhanden, die insbesondere die 360°-Winkelabdeckung des Umfelds des Kraftfahrzeugs realisieren. Von diesen acht Radarsensoren können drei in einem vorderen Stoßfänger des Kraftfahrzeugs, drei in einem hinteren Stoßfänger des Kraftfahrzeugs und zwei seitlich im Kraftfahrzeug, insbesondere in Türen oder einem anderen Karosserieteil, bevorzugt dem Schweller, verbaut sein. Zum verdeckten Verbau von Radarsensoren hinter Metallflächen kann vorgesehen sein, dass ein radardurchlässiges Fenster eingesetzt und überlackiert wird. Eine symmetrische Ausgestaltung lässt sich dann insbesondere erreichen, indem an den Ecken des Kraftfahrzeugs je ein Radarsensor vorgesehen wird, so dass auf jeder der vier Seiten des Kraftfahrzeugs zwei äußere und ein mittiger Radarsensor vorgesehen sein können, wobei sich insbesondere die Einbauhöhe des mittigen Radarsensors immer nach oben oder unten abweichend von den Einbauhöhen der äußeren Radarsensoren unterscheidet. Beispielsweise kann vorgesehen sein, dass bei Platzierung von vier Radarsensoren an den Ecken des Kraftfahrzeugs jeweils die entlang einer Seite des Kraftfahrzeugs mittig angeordneten Radarsensoren eine geringere Einbauhöhe aufweisen als die beiden äußeren Radarsensoren. Alternativ ist es auch denkbar, dass die mittigen Radarsensoren eine größere Einbauhöhe aufweisen als die beiden äußeren Radarsensoren.

Es sei insgesamt angemerkt, dass im Rahmen der vorliegenden Erfindung bevorzugt Weitwinkel-Radarsensoren verwendet werden, um die Überlappungsbereiche möglichst leicht erzielen zu können. Beispielsweise kann mithin vorgesehen sein, dass die Radarsensoren einen Erfassungsbereich aufweisen, der im Azimut einen Winkelbereich von wenigstens 120°, bevorzugt wenigstens 140°, abdeckt. In der Elevation ist meist ein geringeres Winkelintervall ausreichend, beispielsweise eine Winkelausdehnung des Erfassungsbereichs von wenigstens 90°.

Um insgesamt hochqualitative Radardaten zu erhalten, ist es auch im Rahmen der vorliegenden Erfindung besonders zweckmäßig, auf Halbleitertechnologie, insbesondere CMOS-Technologie, basierende Radarsensoren einzusetzen. So kann vorgesehen sein, dass die Radarsensoren einen einen Radartransceiver realisierenden Halbleiterchip, insbesondere CMOS-Chip, aufweisen. Besonders zweckmäßig ist es ferner, wenn durch den Halbleiter-chip auch eine Steuereinheit des Radarsensors und/oder eine digitale Signalverarbeitungskomponente realisiert sind und/oder die Antennenanordnung und der Halbleiterchip als ein Package realisiert sind. Auf diese Weise entstehen äußerst kleinbauende Radarsensoren, die dennoch, auch im Nahbereich, hochqualitative Radardaten liefern und eine Vielzahl nützlicher Betriebsmodi unterstützen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: eine Frontansicht des Kraftfahrzeugs der Fig. 1,
- Fig. 3: eine Heckansicht des Kraftfahrzeugs aus Fig. 1,
- Fig. 4: eine Seitenansicht des Kraftfahrzeugs aus Fig. 1, und
- Fig. 5: eine Skizze zur Erläuterung von in Vertikalrichtung überlappenden Erfassungsbereichen.

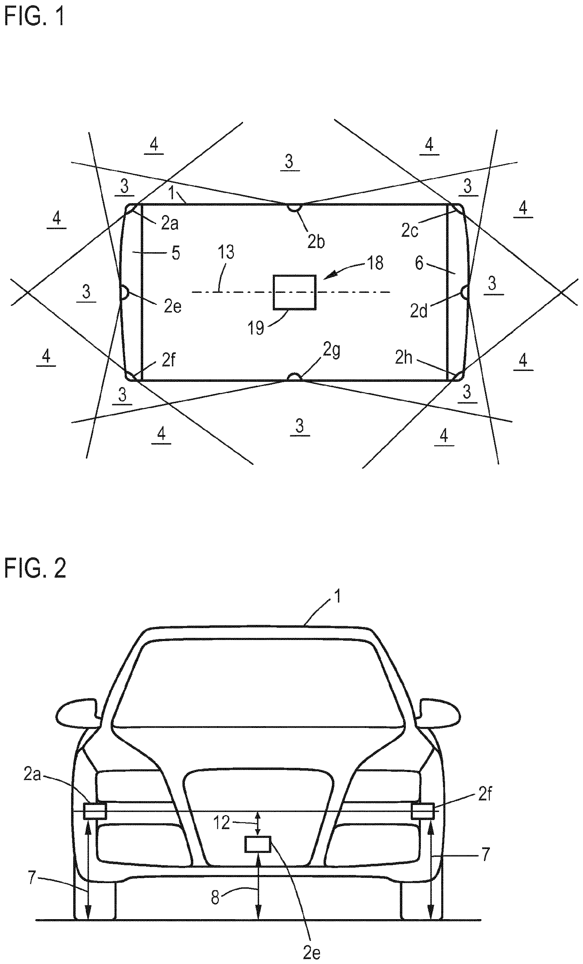

Fig. 1 zeigt eine Prinzipskizze eines erfindungsgemäßen Kraftfahrzeugs 1. Das Kraftfahrzeug 1 weist zur Umfeldüberwachung acht Radarsensoren 2a - 2h auf, wobei es sich um auf Halbleitertechnologie, hier CMOS-Technologie, basierende Weitwinkel-Radarsensoren handelt. Der Öffnungswinkel der dargestellten Erfassungsbereiche 3 kann beispielsweise 150° betragen. Die Erfassungsbereiche 3 decken das Umfeld des Kraftfahrzeugs 1 in einem 360°-Radius ab. Aufgrund des großen horizontalen Öffnungswinkels der Erfassungsbereiche 3 existieren ersichtlich großräumige Überlappungsbereiche 4 zumindest zwischen benachbarten Radarsensoren 2a bis 2h.

Die Radarsensoren 2a bis 2h weisen allesamt einen zumindest den Radar-transceiver realisierenden Halbleiter-Chip auf, der gemeinsam mit der Antennenanordnung als ein Package realisiert ist. Die Antennenanordnung ist dabei so ausgestaltet, dass nicht nur Winkel in der Horizontalen, also im Azimut, vermessen werden können, sondern auch Winkel in der Vertikalen, mithin in der Elevation. Hierzu können beispielsweise von der Antennenanordnung nicht nur in horizontaler Richtung aufeinanderfolgende Antennenelemente umfasst sein, sondern auch wenigstens zwei Antennenelemente in Vertikalrichtung aufeinanderfolgen. Der Öffnungswinkel des Erfassungsbereichs 3 in Vertikalrichtung kann beispielsweise 90° betragen.

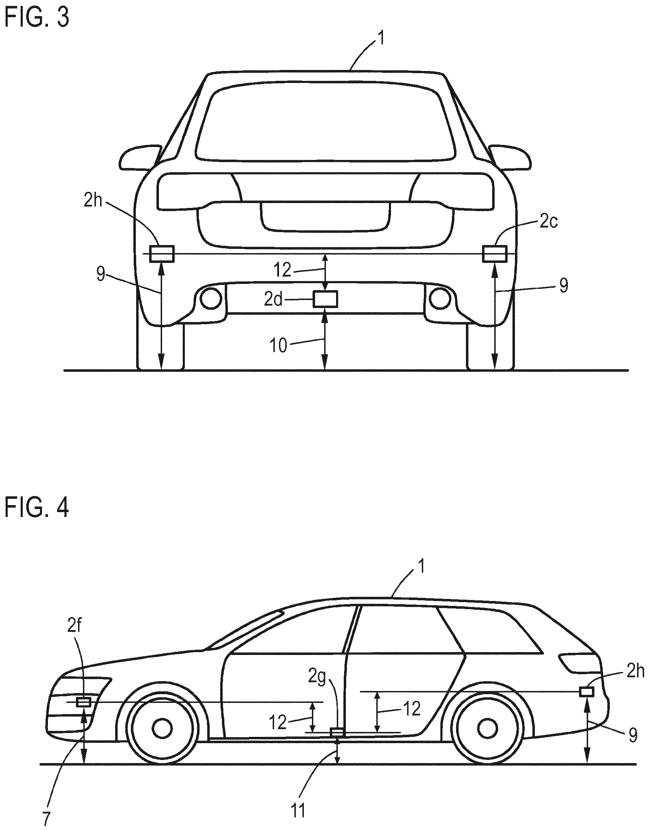

Vorliegend sind die vorderen Radarsensoren 2a, 2e und 2f verdeckt in einem vorderen Stoßfänger 5 verbaut, die hinteren Radarsensoren 2c, 2d und 2h in einem hinteren Stoßfänger 6. Die seitlichen Radarsensoren 2b und 2g können beispielsweise in Türen des Kraftfahrzeugs 1 verbaut sein, vorliegend jedoch sind sie in den Schwellern des Kraftfahrzeugs 1 vorgesehen. Denn die Radarsensoren 2a bis 2h sind, wie durch die Figuren 2 bis 4 genauer erläutert wird, in verschiedenen Einbauhöhen vorgesehen. So zeigt Fig. 2 eine Frontansicht des Kraftfahrzeugs 1, in der die Einbaupositionen der Radarsensoren 2a, 2e und 2f gezeigt sind. Ersichtlich sind die Radarsensoren 2a und 2f in einer Einbauhöhe 7 verbaut, der Radarsensor 2e, also der an der Frontseite mittige Radarsensor, ist in einer geringeren Einbauhöhe 8 verbaut. Dies gilt entsprechend für das Heck, vgl. Fig. 3, wo die Radarsensoren 2h und 2c in einer Einbauhöhe 9 verbaut sind, die größer ist als die Einbauhöhe 10, in der der mittlere Radarsensor 2d verbaut ist.

Dieser grundlegende Zusammenhang gilt auch für die Seiten des Kraftfahrzeugs 1, vgl. Fig. 4, wonach zwischen dem in der Einbauhöhe 7 verbauten vorderen Radarsensor 2f und dem in einer Einbauhöhe 9 verbauten hinteren Radarsensor 2h der Radarsensor 2g in einer Einbauhöhe 11 verbaut ist, die kleiner als die Einbauhöhe 7 und kleiner als die Einbauhöhe 9 ist. Die verschiedenen Differenzen der Einbauhöhe sind durch Doppelpfeile 12 in den Figuren gezeigt.

Damit ergibt sich eine Gesamtkonfiguration, in der immer abwechselnd ein höher und ein tiefer verbauter Radarsensor 2a bis 2h aufeinanderfolgen, betrachtet man die Anordnung in Umlaufrichtung. Die Einbauhöhen 7, 9, 11 sind dabei so gewählt, dass eine Symmetrie entlang der Längsachse 13 des Kraftfahrzeugs 1, wie sie in Fig. 1 angedeutet ist, gegeben ist. Es kann jedoch auch vorgesehen sein, dass die Einbauhöhen 7 und 9 gleich gewählt werden, entsprechend können die Einbauhöhen 8, 10 und gegebenenfalls 11 ebenso gleichgroß gewählt werden.

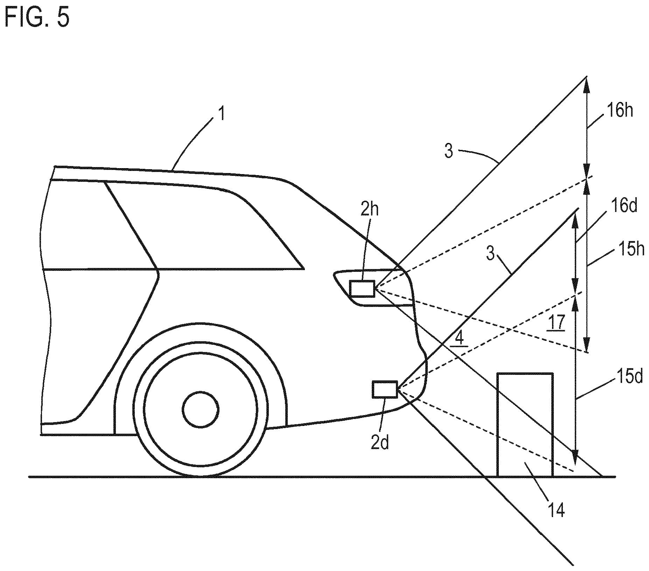

Allgemein kann auf diese Weise eine verbesserte Vermessung von Elevationsinformationen von Objekten 14 erfolgen, wie durch die Prinzipskizze in Fig. 5 erläutert wird, die die Radarsensoren 2h und 2d am Heck mit ihren entsprechenden Erfassungsbereichen 3 und dem in vertikaler Richtung gegebenen Überlappungsbereich 4 zeigen. Der Winkelfehler bei der Bestimmung des Elevationswinkels ist dabei im zentralen Bereich der durch den Erfassungsbereich 3 beschriebenen Radarkeulen niedriger als in äußeren Bereichen. Zieht man einen Schwellwert für den Winkelfehler bzw. einen Verlässlichkeitswert heran, kann beispielsweise jeweils ein zentraler Bereich 15h, 15d geringen Winkelfehlers, also guter Elevationsmessung, definiert werden, an den Außenrandbereiche 16h, 16d anschließen, in denen der Elevationswinkel und somit eine daraus abgeleitete Elevationsinformation mit einem größeren Fehler behaftet ist.

Ersichtlich ergänzen sich die Bereiche 15g, 15h guter Elevationsmessfähigkeit zunächst derart, dass der entstehende Gesamtbereich guter Elevationsmessfähigkeit vergrößert ist. Ferner liegen im Überlappungsbereich 4, insbesondere auch im Überlappungsbereich 17 der Bereiche 15d und 15h, mehrere Messwerte für den Elevationswinkel und somit die Elevationsinformation vor, die statistisch kombiniert und/oder durch Plausibilisierung gemeinsam ausgewertet werden können.

Im Beispiel der Fig. 5 wird die Höhe des Objekts 14 am besten durch den Radarsensor 2d vermessen.

Das Kraftfahrzeug 1 weist, vgl. Fig. 1, auch eine Steuereinrichtung 18 auf, die vorliegend ein Steuergerät 19 eines zentralen Fahrerassistenzsystems umfasst. In dem Steuergerät 19 werden die Sensordaten aller Umfeldsensoren des Kraftfahrzeugs 1, also auch der Radarsensoren 2a bis 2h, zentral gesammelt und gemeinsam ausgewertet, um beispielsweise ein Umfeldmodell zu erzeugen, welches dann für verschiedene Funktionen unterschiedlicher Fahrzeugsysteme und Fahrerassistenzsysteme genutzt werden kann. Die Steuereinrichtung 18 kann gegebenenfalls auch Steuereinheiten der Radarsensoren 2a bis 2h selbst umfassen.

Die Steuereinrichtung 18 ist nun dazu ausgebildet, Radardaten aus den Überlappungsbereichen 4, wie sie von den den entsprechenden Überlappungsbereich 4 vermessenden Radarsensoren 2a bis 2h aufgenommen wurden, gemeinsam auszuwerten, vorliegend beispielhaft durch statistische Kombination. Dabei sind den Einbauhöhen 7 bis 11 und den gemessen Elevationswinkeln Verlässlichkeitsinformationen, beispielsweise in Form eines Winkelfehlers oder eines sonstigen Verlässlichkeitswerts, zugeordnet, die den in Fig. 5 beschriebenen Sachverhalt unterschiedlich genauer Messungen abhängig vom Elevationswinkel wiedergeben. Auf diese Weise ist es in einer statistischen Kombination, beispielsweise Mittelwertbildung, möglich, die genauere Messung stärker zu gewichten. Es ist auch eine Ausgestaltung denkbar, in der nur in den Bereichen 15d, 15h guter Elevationsmessfähigkeit enthaltene Radardaten in die zu ermittelnde Elevationsinformation, welche im Allgemeinen ein Höhenwert für ein Objekt 14 sein wird, eingehen.

Auf diese Weise lässt sich durch die Nutzung unterschiedlicher Einbauhöhen 7 bis 11 ein deutlich verbesserte Messung in der Elevation erreichen.

## Patentansprüche

1. Kraftfahrzeug (1), aufweisend wenigstens zwei Radarsensoren (2a-2h), die jeweils eine eine Winkelmessung in Elevation und Azimut erlaubende Antennenanordnung aufweisen, wobei die Erfassungsbereiche (3) von wenigstens zwei der wenigstens zwei Radarsensoren (2a-2h) in einem Überlappungsbereich (4) überlappen, wobei wenigstens zwei einen Überlappungsbereich (4) bildende, benachbart angeordnete Radarsensoren (2a-2h) in unterschiedlicher Einbauhöhe (7-11) in dem Kraftfahrzeug (1) verbaut sind, wobei es eine Steuereinrichtung (18) zur Auswertung der Radardaten der Radarsensoren (2a-2h) aufweist, die wenigstens bei der Ermittlung einer Elevationsinformation für ein im Überlappungsbereich (4) gelegenes, vermessenes Merkmal (14) zur gemeinsamen Auswertung aller Radardaten der im Überlappungsbereich (4) messenden Radarsensoren (2a-2h) ausgebildet ist,
**dadurch gekennzeichnet,**
**dass** die Steuereinrichtung (18) bei der Ermittlung der Elevationsinformation zur gewichteten Berücksichtigung der Radardaten einzelner im Überlappungsbereich (4) messender Radarsensoren (2a-2h) anhand einer von ihrer Einbauhöhe (7-11) abhängigen Verlässlichkeitsinformation ausgebildet ist.

2. Kraftfahrzeug (1) nach Anspruch 1,
**dadurch gekennzeichnet,**
**dass** die Antennenanordnungen aller Radarsensoren (2a-2h) gleich ausgebildet und/oder orientiert sind.

3. Kraftfahrzeug (1) nach Anspruch 1 oder 2,
**dadurch gekennzeichnet,**
**dass** eine gerade Anzahl von Radarsensoren (2a-2h) vorhanden ist, wobei in Umlaufrichtung um das Kraftfahrzeug (1) immer abwechselnd ein Radarsensor (2a-2h) höher und ein Radarsensor (2a-2h) tiefer verbaut ist, und/oder dass die Radarsensoren (2a-2h) das Umfeld des Kraftfahrzeugs (1) in einem 360°-Winkelbereich abdecken.

4. Kraftfahrzeug (1) nach Anspruch 3,
**dadurch gekennzeichnet,**
**dass** die Radarsensoren (2a-2h), auch bezüglich ihrer Einbauhöhen (7-11), bezüglich einer mittleren Längsachse (13) des Kraftfahrzeugs (1) symmetrisch angeordnet sind.

5. Kraftfahrzeug (1) nach Anspruch 3 oder 4,
**dadurch gekennzeichnet,**
**dass** acht Radarsensoren (2a-2h) vorhanden sind, von denen drei in einem vorderen Stoßfänger (5) des Kraftfahrzeugs (1), drei in einem hinteren Stoßfänger (6) des Kraftfahrzeugs (1) und zwei seitlich im Kraftfahrzeug (1), insbesondere in Türen und/oder Schwellern, verbaut sind.

6. Kraftfahrzeug (1) nach Anspruch 5,
**dadurch gekennzeichnet,**
**dass** bei Platzierung von vier Radarsensoren (2a-2h) an den Ecken des Kraftfahrzeugs (1) jeweils die entlang einer Seite des Kraftfahrzeugs (1) mittig angeordneten Radarsensoren (2a-2h) eine geringere Einbauhöhe (7-11) aufweisen als die beiden äußeren Radarsensoren (2a-2h).

7. Kraftfahrzeug (1) nach einem der vorangehenden Ansprüche,
**dadurch gekennzeichnet,**
**dass** die Radarsensoren (2a-2h) einen einen Radartransceiver realisierenden Halbleiterchip, insbesondere CMOS-Chip, aufweist.

8. Kraftfahrzeug (1) nach Anspruch 7,
**dadurch gekennzeichnet,**
**dass** durch den Halbleiterchip auch eine Steuereinheit des Radarsensors (2a-2h) und/oder eine digitale Signalverarbeitungskomponente realisiert sind und/oder die Antennenanordnung und der Halbleiterchip als ein Package realisiert sind.

## Claims

1. Motor vehicle (1) having at least two radar sensors (2a-2h) which each have an antenna arrangement allowing angle measurement in elevation and azimuth, wherein the detection ranges (3) of at least two of the at least two radar sensors (2a-2h) overlap in an overlap region (4), wherein at least two radar sensors (2a-2h) arranged adjacent to each other and forming an overlap region (4) are installed at different installation heights (7-11) in the motor vehicle (1), wherein a control device (18) is provided for evaluating the radar data from the radar sensors (2a-2h) and is configured, at least when determining an elevation information for a measured feature (14) located in the overlap region (4), for common evaluation of all radar data of the radar sensors (2a-2h) measuring in the overlap region (4), **characterised in that** the control device (18) is configured, when determining the elevation information, for taking weighted account of the radar data of individual radar sensors (2a-2h) measuring in the overlap region (4) on the basis of a reliability information dependent on the installation height (7-11).

2. Motor vehicle (1) according to claim 1, **characterised in that** the antenna arrangements of all radar sensors (2a-2h) are configured and/or oriented identically.

3. Motor vehicle (1) according to claim 1 or 2, **characterised in that** an even number of radar sensors (2a-2h) is present, wherein in the circumferential direction around the motor vehicle (1), alternately one radar sensor (2a-2h) is installed higher and one radar sensor (2a-2h) is installed lower, and/or that the radar sensors (2a-2h) cover the environment of the motor vehicle (1) in a 360° angular range.

4. Motor vehicle according to claim 3, **characterised in that** the radar sensors (2a-2h) are arranged symmetrically, also with respect to their installation heights (7-11), relative to a central longitudinal axis (13) of the motor vehicle (1).

5. Motor vehicle (1) according to claim 3 or 4, **characterised in that** eight radar sensors (2a-2h) are provided, of which three are installed in a front bumper (5) of the motor vehicle (1), three in a rear bumper (6) of the motor vehicle (1), and two at the sides of the motor vehicle (1), in particular in doors and/or sills.

6. Motor vehicle (1) according to claim 5, **characterised in that** when four radar sensors (2a-2h) are positioned at the corners of the motor vehicle (1), in each case the radar sensors (2a-2h) arranged centrally along a side of the motor vehicle (1) have a lower installation height (7-11) than the two outer radar sensors (2a-2h).

7. Motor vehicle (1) according to any of the preceding claims, **characterised in that** the radar sensors (2a-2h) have a semiconductor chip, in particular a CMOS chip, implementing a radar transceiver.

8. Motor vehicle (1) according to claim 7, **characterised in that** the semiconductor chip also implements a control unit of the radar sensor (2a-2h) and/or a digital signal processing component, and/or the antenna arrangement and the semiconductor chip are implemented as a package.

## Revendications

1. Véhicule automobile (1), comportant au moins deux capteurs radars (2a-2h), qui comportent chacun un agencement d'antennes permettant une mesure d'angle en élévation et azimut, dans lequel les zones de détection (3) d'au moins deux des au moins deux capteurs radars (2a-2h) se chevauchent dans une zone de chevauchement (4), dans lequel au moins deux capteurs radars (2a-2h) agencés au voisinage l'un de l'autre et formant une zone de chevauchement (4) sont installés à des hauteurs d'installation différentes (7-11) dans le véhicule automobile (1), lequel véhicule automobile comporte un dispositif de commande (18) afin d'évaluer les données de radars des capteurs radars (2a-2h), lequel dispositif de commande est conçu pour l'évaluation commune de toutes les données de radars des capteurs radars (2a-2h) mesurant dans la zone de chevauchement (4) au moins lors de la détermination d'une information d'élévation pour une caractéristique (14) mesurée située dans la zone de chevauchement (4),
**caractérisé en ce que**
le dispositif de commande (18) est conçu pour, lors de la détermination de l'information d'élévation, prendre en compte de façon pondérée les données radars de capteurs radars individuels (2a-2h), mesurant dans la zone de chevauchement (4), à l'aide d'une information de fiabilité dépendante de leur hauteur d'installation (7-11).

2. Véhicule automobile (1) selon la revendication 1,
**caractérisé en ce que**
les agencements d'antennes de tous les capteurs radars (2a-2h) sont conçus et/ou orientés de manière identique.

3. Véhicule automobile (1) selon la revendication 1 ou 2,
**caractérisé en ce qu'**il y a
un nombre pair de capteurs radars (2a-2h), tel que dans la direction périphérique autour du véhicule automobile (1) sont installés en alternance un capteur radar (2a-2h) installé plus haut et un capteur radar (2a-2h) installé plus bas, et/ou **en ce que** les capteurs radars (2a-2h) couvrent l'environnement du véhicule automobile (1) sur une plage angulaire de 360°.

4. Véhicule automobile (1) selon la revendication 3,
**caractérisé en ce que**
les capteurs radars (2a-2h) sont agencés symétriquement par rapport à un axe longitudinal médian (13) du véhicule automobile (1), également quant à leur hauteur d'installation (7-11).

5. Véhicule automobile (1) selon la revendication 3 ou 4,
**caractérisé en ce qu'**il y a
huit capteurs radars (2a-2h), parmi lesquels trois sont installés dans un pare-chocs avant (5) du véhicule automobile (1), trois dans un pare-chocs arrière (6) du véhicule automobile (1) et deux sur les côtés dans le véhicule automobile (1), en particulier dans des portières et/ou des seuils.

6. Véhicule automobile (1) selon la revendication 5,
**caractérisé en ce que**,
lors du placement de quatre capteurs radars (2a-2h) aux angles du véhicule automobile (1), les capteurs radars (2a-2h) agencés au milieu le long d'un côté du véhicule automobile (1) sont à chaque fois à une hauteur d'installation (7-11) plus petite que celle des deux capteurs radars (2a-2h) extérieurs.

7. Véhicule automobile (1) selon l'une quelconque des revendications précédentes,
**caractérisé en ce que**
les capteurs radars (2a-2h) ont une puce à semi-conducteurs, en particulier une puce CMOS, réalisant un émetteur/récepteur radar.

8. Véhicule automobile (1) selon la revendication 7,
**caractérisé en ce qu'**une
unité de commande du capteur radar (2a-2h) et/ou un composant de traitement de signal numérique sont aussi réalisés par la puce à semi-conducteurs et/ou l'agencement d'antennes et la puce à semi-conducteurs sont réalisés sous forme de package.
